# EUROPÄISCHE PATENTSCHRIFT

(11) **EP 2 240 746 B1**
(45) Veröffentlichungstag und Bekanntmachung des Hinweises auf die Patenterteilung: **08.08.2018**
(21) Anmeldenummer: 08870160.2
(22) Anmeldetag: 18.11.2008
(51) Int. Cl.: G01F 23/26

(54) **KAPAZITIVER FÜLLSTANDSENSOR UND VERFAHREN ZUM SCHÄTZEN EINES FÜLLSTANDES**
CAPACITIVE FILL LEVEL SENSOR AND METHOD FOR ESTIMATING A FILL LEVEL
CAPTEUR DE NIVEAU CAPACITIF ET PROCÉDÉ D'ÉVALUATION D'UN NIVEAU

(30) Priorität: 10.01.2008 DE 102008003802
(43) Veröffentlichungstag der Anmeldung: 20.10.2010
(73) Patentinhaber: Robert Bosch GmbH, 70442 Stuttgart (DE)
(72) Erfinder: ARNDT, Michael, 72762 Reutlingen (DE); NIEMANN, Markus, 66701 Beckingen (DE)
(86) Internationale Anmeldenummer: PCT/EP2008/065718
(87) Internationale Veröffentlichungsnummer: WO 2009/086980

(56) Entgegenhaltungen:
- DE-A1- 3 824 231
- DE-A1- 10 144 875
- DE-A1- 19 938 270
- DE-B- 1 199 010
- US-A- 4 122 718
- US-A1- 2003 184 318

## Beschreibung

### STAND DER TECHNIK

Die vorliegende Erfindung betrifft einen kapazitiven Füllstandsensor und ein Verfahren zum Schätzen eines Füllstandes, insbesondere zum kontinuierlichen Schätzen eines Füllstandes in einem Flüssigkeitsbehältnis mittels eines kapazitiven Füllstandsensors.

Kapazitive Füllstandsensoren sind aus der DE 195 11 556 C1 und DE 197 28 280 A1 bekannt. Die Sensoren weisen zwei ineinander angeordnete, zylindrische ausgeformte, metallische Elektroden auf. Die Flüssigkeit kann in einem Zwischenraum zwischen die beiden Zylinder einfliesen und den Zwischenraum je nach Füllstandshöhe auffüllen. Die Flüssigkeit mit einer höheren Dielektrizitätskonstante verdrängt dabei die Luft mit einer vergleichsweise geringen Dielektrizitätskonstanten. Die elektrische Kapazität zwischen den beiden Elektroden ergibt sich entsprechend dem Anteil der Flüssigkeit zwischen den beiden Elektroden. Eine Auswertungsschaltung bestimmt die Kapazität und schätzt darauf basierend die Füllstandshöhe.

Beim Einsatz von Füllstandsensoren ist darauf zu achten, dass deren Elektroden beständig gegenüber den Flüssigkeiten sind. Bei besonders reaktiven Flüssigkeiten, z.B. Harnstoffsäure, müssen daher besonders hochwertige Elektroden aus Edelmetallen oder korrosionsbeständigen Stählen eingesetzt werden.

Aus der US 4 122 718 A1 ist ein Sensorsystem zur Erfassung eines Flüssigkeitslevels in einem Tank bekannt. Hierbei wird ein nicht absorbierendes Material verwendet, welches der zu erfassenden Flüssigkeit ausgesetzt wird. Zur Erfassung des Flüssigkeitslevels werden dabei zwei Elektroden in die Flüssigkeit eingetaucht, die zusammen einen Kondensator bilden. Durch die Erfassung der Kapazität zwischen den beiden Kondensatoren kann auf die dielektrische Konstante K und somit auf die Füllhöhe geschlossen werden.
Aus der DE 101 44 875 A1 ist ein Verfahren sowie ein Füllstandmeßsystem bekannt, bei dem das Ablaufverhalten der Flüssigkeit am Füllstandssensor berücksichtigt wird. Hierbei werden die zeitlichen Schwankungen des Sensorsignals berücksichtigt, um auf einen Mittelwert der Füllstandshöhe zu gelangen.

### OFFENBARUNG DER ERFINDUNG

Der erfindungsgemäße Füllstandsensor sieht daher folgende Merkmale vor: zwei Elektroden mit einer Kunststoff-Ummantelung, eine Kapazitäts-Messeinrichtung zum Erfassen der elektrischen Kapazität zwischen den Elektroden, und eine Schätzeinrichtung zum Schätzen eines Füllstandes (h) einer Flüssigkeit zwischen den Elektroden basierend auf der erfassten elektrischen Kapazität unter Berücksichtigung einer unterschiedlichen Dielektrizitätskonstante für in Flüssigkeit und außerhalb von Flüssigkeit befindliche Abschnitte der Kunststoff-Ummantelung.

Der erfindungsgemäße Füllstandsensor nutzt eine Beschichtung der metallischen Elektroden mit einem Kunststoff. Hierdurch wird eine verbesserte Korrosionsbeständigkeit erreicht. Erfindungsgemäß wird dabei ferner berücksichtigt, dass sich der Kunststoff mit der Flüssigkeit tränkt, um eine gleich freiliegenden metallischen Elektroden vergleichbare Messgenauigkeit zu erreichen.

Der erfindungsgemäße Füllstandsensor umfasst hierzu eine Kompensationseinrichtung zum Kompensieren einer Drift der erfassten elektrischen Kapazität bedingt durch eine Änderung der Dielektrizitätskonstante eines Abschnitts der getränkten Kunststoff-Beschichtung, wenn dieser getränkte Abschnitt nach einem Absinken des Füllstands (h) trocknet, wobei die Kompensationseinrichtung beinhaltet: einen Hochpass-Filter zum Bestimmen hochfrequenter Änderungen der elektrischen Kapazität; einen Akkumulator zum Akkumulieren der hochfrequenten Änderungen der elektrischen Kapazität zu einem Akkumulationswert; ein Dämpfungsglied zum periodischen Dämpfen des Akkumulationswerts mit einer Dämpfungsrate; und einen Addierer, der mit der Kapazitäts-Messeinrichtung und dem Akkumulator zum Kompensieren der erfassten elektrischen Kapazität mit dem Akkumulationswert gekoppelt ist.

Gemäß einem weiteren Aspekt der Erfindung sieht ein Verfahren zum Schätzen des Füllstandes folgenden Schritte vor: Erfassen einer elektrischen Kapazität zwischen zwei Elektroden, die eine Kunststoff-Ummantelung aufweisen, Schätzen eines Füllstandes einer Flüssigkeit zwischen den Elektroden basierend auf der erfassten elektrischen Kapazität unter Berücksichtigung einer unterschiedlichen Dielektrizitätskonstante für in Flüssigkeit und außerhalb von Flüssigkeit befindliche Abschnitte der Kunststoff-Ummantelung, und Kompensieren einer Drift der erfassten elektrischen Kapazität bedingt durch eine Änderung der Dielektrizitätskonstante eines getränkten Abschnitts der Kunststoff-Ummantelung, wenn dieser getränkte Abschnitt nach einem Absinken des Füllstands (h) trocknet, wobei das Kompensieren folgende Teilschritte aufweist: Bestimmen hochfrequenter Änderungen der elektrischen Kapazität mittels eines Hochpass-Filters, Akkumulieren der hochfrequenten Änderungen der elektrischen Kapazität zu einem Akkumulationswert, periodisches Dämpfen des Akkumulationswerts mit einer Dämpfungsrate, und Kompensieren der erfassten elektrischen Kapazität mit dem Akkumulationswert.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:

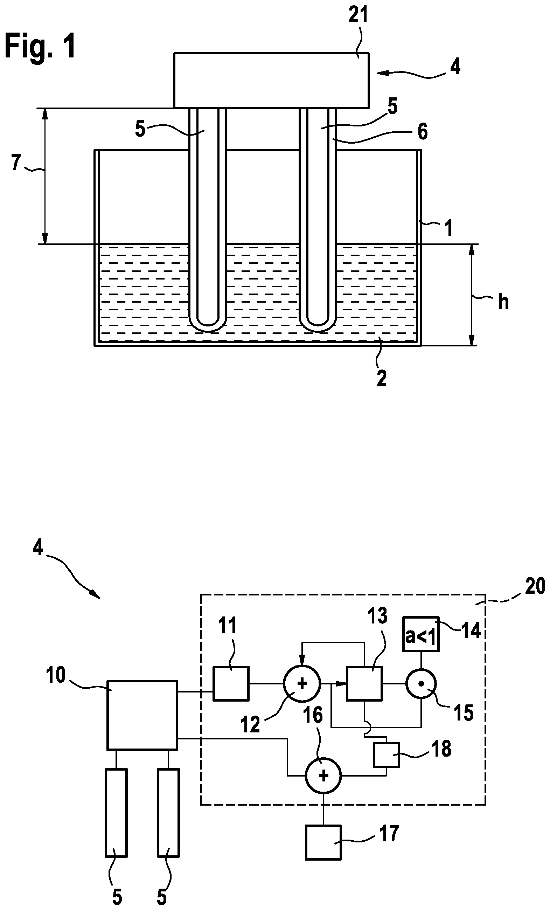

Fig. 1 einen schematischen Aufbau eines Füllstandsensors im Querschnitt und
Fig. 2 ein Blockschaltbild des Füllstandsensors von Fig. 1.

### AUSFÜHRUNGSFORMEN DER ERFINDUNG

In einem Flüssigkeitsbehälter 1 ist eine Flüssigkeit 2 bis zu einer Füllstandshöhe h vorhanden. Ein Füllstandsensor 4 nach einer Ausführungsform ist mit seinen zwei Elektroden 5 in die Flüssigkeit 2 eingetaucht. Die beiden Elektroden 5 sind mit einer Kunststoff-Ummantelung 6 beschichtet. Das Material der Kunststoff-Ummantelung 6 ist derart ausgewählt, dass es beständig gegenüber den Flüssigkeiten 2 ist, von denen der Füllstandsensor 4 typischerweise umspült wird.

Die beiden Elektroden 5 bilden einen Kondensator mit einer Kapazität C. Die Kapazität C ist abhängig von der Geometrie der Elektroden 5 und den Dielektrika, die sich zwischen den Elektroden befinden. In einem unteren Bereich der Elektroden 5 dominiert die Flüssigkeit 2 die dielektrischen Eigenschaften, zu einem geringeren Anteil trägt der Kunststoff 6 noch bei. In dem oberen Abschnitt der Elektroden 5 trägt der Kunststoff 6 mit einer von Luft deutlich verschiedenen, typischen spezifischen Dielektrizitätskonstante von 4 bis 4,5, trotz einer vergleichsweise geringen Wandstärke, in nicht vernachlässigbarer Weise bei.

Der Kunststoff der Kunststoff-Ummantelung tränkt sich mit der Flüssigkeit 2. Dabei ändert sich typischerweise die Dielektrizitätskonstante, bis der Kunststoff mit der Flüssigkeit gesättigt ist. Der Prozess ist weitgehend reversibel. Ist der Kunststoff in Kontakt mit Luft trocknet der Kunststoff aus. Die Dielektrizitätskonstante des Kunststoffes geht dabei auf ihren Ursprungswert zurück.

In einem ersten Modell kann die Kapazität als eine Parallelschaltung des in Flüssigkeit getauchten, unteren Abschnitts und des in Luft befindlichen oberen Abschnitts genähert werden.

Der obere nicht in Flüssigkeit befindliche Abschnitt wird als eine Serienschaltung aus zwei oberen Kondensatoren genähert. Der erste obere Kondensator entspricht dem an Luft befindlichen Abschnitt der Kunststoff-Ummantelung 6, wobei ein getrockneter Kunststoff mit einer entsprechenden Dielektrizitätkonstante zu Grunde gelegt wird. Der zweite obere Kondensator entspricht dem mit Luft gefüllten Zwischenraum zwischen den Kunststoff-Ummantelungen 6.

Der untere in Flüssigkeit befindliche Abschnitt wird als eine Serienschaltung aus zwei unteren Kondensatoren genähert. Der erste untere Kondensator entspricht dem in der Flüssigkeit befindlichen Abschnitt der Kunststoff-Ummantelung 6, wobei ein mit der Flüssigkeit getränkter Kunststoff mit entsprechender Dielektrizitätskonstante zu Grunde gelegt wird. Der zweite untere Kondensator entspricht dem mit der Flüssigkeit gefüllten Zwischenraum zwischen den Kunststoff-Ummantelungen 6.

Die Füllstandshöhe h legt die Anteile fest, mit welchen der untere und der obere Abschnitt zu der Gesamtkapazität beitragen.

Ein Verfahren zum Schätzen der Füllstandshöhe bestimmt zunächst die elektrische Kapazität. Hierfür ist eine Kapazitäts-Messeinrichtung 10 vorgesehen, die mit den beiden Elektroden 5 gekoppelt ist. Danach bestimmt eine Auswertungseinrichtung 21 anhand der elektrischen Kapazität und dem obigen Modell mit der Parallelschaltung die Füllstandshöhe h. Dazu wird ermittelt, welche Anteile der obere und der untere Abschnitt haben müssen, um mit der gemessenen elektrischen Kapazität übereinzustimmen.

Eine weitere Ausführungsform berücksichtigt Änderungen, die beim Entnehmen von Flüssigkeit 2 aus dem Behälter 1 auftreten können. Beim Entnehmen sinkt der Füllstand h und in Folge auch die gemessene Kapazität. Die Messeinrichtung 10 erfasst die Kapazitätsänderung.

Durch das Absenken des Füllstands h wird ein zuvor durch Flüssigkeit benetzter Abschnitt der Kunststoff-Ummantelung 6 der Luft ausgesetzt. Mit einer typischen Zeitkonstante von mehreren Minuten bis wenigen Stunden trocknet die Kunststoff-Ummantelung 6 aus. Dabei kann sich bei dem Kunststoff die Dielektrizitätskonstante ändern, zumeist sinkt sie, z.B. von 4,4 auf 4,0 ab. In Folge ändert sich auch die Kapazität mit dieser Zeitkonstante. Kurz nach dem Entnehmen von Flüssigkeit 2 ist der von der Messeinrichtung 10 ausgegebene Messwert beispielsweise zu hoch, da der Kunststoff noch nicht ausgetrocknet ist. Mit zunehmender Zeit nähert sich der Messwert dem zu erwartenden Messwert an, wenn man den Schätzalgorithmen einen trockenen Kunststoff in dem oberen Abschnitt zugrunde legt, wie in dem obig beschriebenen Verfahren zum Bestimmen der Füllstandshöhe h.

Der Füllstandsensor 4 kann, in einem nicht erfindungsgemäßen Beispiel, zum Kompensieren der geänderten Werte bedingt durch das Austrocknen eine Dielektrizitätskonstante für den Kunststoff annehmen, die zwischen der Dielektrizitätskonstante des getrockneten Kunststoffs und des getränkten Kunststoffs liegt. Der erfindungsgemäße Füllstandsensor 4 berücksichtigt die Änderung der Dielektrizitätskonstante über die Zeit. Hierzu sind eine Kompensationseinrichtung 20 bzw. entsprechende Verfahrensschritte vorgesehen.
Die von der Messeinrichtung 10 ausgegebenen Messwerte werden einem Hochpass-Filter 11 zugeführt. Das Hochpass-Filter ist derart ausgelegt, dass ein Signal entsprechend einer Änderung der elektrischen Kapazität aufgrund des Austrocknens des Kunststoffs unterdrückt wird. Die Zeitkonstante des Hochpass-Filters kann dazu um eine Größenordnung geringer als die typische Zeitkonstante des Austrocknens sein. Das Hochpass-Filter weist jedoch eine ausreichend geringe Zeitkonstante auf, so dass Signale bedingt durch das unmittelbare Befüllen und Entleeren des Behälters 1 weitergeleitet werden. Diese schnellen Änderungen der Kapazität werden von dem Hochpass-Filter 11 ausgegeben.
Der Ausgang des Hochpass-Filters 11 ist mit einem Summierer 12 und Akkumulatorspeicher 13 verbunden. Der Summierer 13 addiert die bisherigen schnellen Änderungen der Kapazität auf und speichert den Wert in dem Akkumulatorspeicher 13.
Auf den Akkumulatorspeicher 13 wirkt ein Dämpfungselement 14, 15, das den Wert in dem Akkumulatorspeicher 13 mit einer vorgegeben Dämpfungsrate verringert. Dies kann zum Beispiel durch eine regelmäßige Multiplikation mit einem Wert a kleiner als 1 erreicht werden. Die Dämpfungsrate kann der typischen Trocknungsrate des Kunststoffs entsprechen. Der durch den Akkumulatorspeicher 13 vorgehaltene Korrekturwert verringert sich somit synchron zu dem Trocknen des Kunststoffs.
Der Korrekturwert in dem Akkumulatorspeicher 13 kann einer Skalierungseinrichtung 18 zugeführt werden, die den Korrekturwert mit einem konstanten negativen Wert b multipliziert.

Der Ausgangswert der Skalierungseinrichtung 18 und der Wert aus der Messeinrichtung 10 werden durch einen Addierer 16 aufaddiert. Eine Ausgabeeinrichtung 17 gibt einen geschätzten Füllstandswert basierend auf der Summe aus, wobei für den in Luft befindlichen Abschnitt ein trockener Kunststoff angenommen wird. Die Funktionsweise und der Aufbau der Ausgabeeinrichtung kann der Auswertungseinrichtung 21 entsprechen.

Der Akkumulatorspeicher 13 generiert einen Korrektursummanden, der sich entsprechend der Zeitkonstante des Austrocknens verringert. Zu dem Zeitpunkt, wenn keine Änderungen mehr durch das Austrocknen zu erwarten sind, ist auch der Korrektursummand auf Null abgefallen.

Der Filter 11, der Summierer 12, der Akkumulatorspeicher 13, das Dämpfungsglied 14, 15 und der Multiplikator 18 können mittels analogen oder digitalen Bauelementen realisiert sein.

## Patentansprüche

1. Kapazitiver Füllstandsensor mit:
- zwei Elektroden (5) mit einer Kunststoff-Ummantelung (6),
- einer Kapazitäts-Messeinrichtung (10) zum Erfassen der elektrischen Kapazität zwischen den Elektroden (5),
- einer Schätzeinrichtung (20) zum Schätzen eines Füllstandes (h) einer Flüssigkeit (2) zwischen den Elektroden basierend auf der erfassten elektrischen Kapazität unter Berücksichtigung unterschiedlicher Dielektrizitätskonstanten für in der Flüssigkeit und außerhalb der Flüssigkeit befindliche Abschnitte der Kunststoff-Ummantelung (6), wobei sich der Kunststoff in der Flüssigkeit mit der Flüssigkeit tränkt, und
- einer Kompensationseinrichtung zum Kompensieren einer Drift der erfassten elektrischen Kapazität bedingt durch eine Änderung der Dielektrizitätskonstante eines Abschnitts der getränkten Kunststoff-Ummantelung (6), wenn dieser getränkte Abschnitt nach einem Absinken des Füllstands (h) trocknet,
wobei die Kompensationseinrichtung (20) beinhaltet:
- einen Hochpass-Filter (11) zum Bestimmen hochfrequenter Änderungen der elektrischen Kapazität;
- einen Akkumulator (12, 13) zum Akkumulieren der hochfrequenten Änderungen der elektrischen Kapazität zu einem Akkumulationswert;
- ein Dämpfungsglied (14, 15) zum periodischen Dämpfen des Akkumulationswerts mit einer Dämpfungsrate; und
- einen Addierer (16), der mit der Kapazitäts-Messeinrichtung (10) und dem Akkumulator (12, 13) zum Kompensieren der erfassten elektrischen Kapazität mit dem Akkumulationswert gekoppelt ist.

2. Verfahren zum Schätzen eines Füllstandes mit den Schritten:
- Erfassen einer elektrischen Kapazität zwischen zwei Elektroden (5), die eine Kunststoff-Ummantelung (6) aufweisen,
- Schätzen eines Füllstandes (h) einer Flüssigkeit (2) zwischen den Elektroden (5) basierend auf der erfassten elektrischen Kapazität unter Berücksichtigung unterschiedlicher Dielektrizitätskonstanten für in der Flüssigkeit und außerhalb der Flüssigkeit befindliche Abschnitte der Kunststoff-Ummantelung (6), wobei vorgesehen ist, dass sich der Kunststoff in der Flüssigkeit mit Flüssigkeit tränkt, und
- Kompensieren einer Drift der erfassten elektrischen Kapazität bedingt durch eine Änderung der Dielektrizitätskonstante eines getränkten Abschnitts der Kunststoff-Ummantelung (6), wenn dieser getränkte Abschnitt nach einem Absinken des Füllstands (h) trocknet,
wobei das Kompensieren folgende Teilschritte aufweist:
- Bestimmen hochfrequenter Änderungen der elektrischen Kapazität mittels eines Hochpass-Filters,
- Akkumulieren der hochfrequenten Änderungen der elektrischen Kapazität zu einem Akkumulationswert,
- periodisches Dämpfen des Akkumulationswerts mit einer Dämpfungsrate, und
- Kompensieren der erfassten elektrischen Kapazität mit dem Akkumulationswert.

3. Verfahren nach Anspruch 2, wobei hochfrequente Änderungen der elektrischen Kapazität bestimmt werden, die eine Frequenz aufweisen, die zwischen der Änderungsrate der Füllstandshöhe und der Änderungsrate der Dielektrizitätskonstante beim Trocknen des Kunststoffs der Kunststoff-Ummantelung liegt.

4. Verfahren nach Anspruch 2 oder 3, wobei die Dämpfungsrate gleich der Änderungsrate der Dielektrizitätskonstante beim Trocknen des Kunststoffs der Kunststoff-Ummantelung gewählt wird.

5. Verfahren nach einem der Ansprüche 2 bis 4, **dadurch gekennzeichnet, dass** die Dämpfungsrate der typischen Trocknungsrate des Kunststoffs entspricht.

## Claims

1. Capacitive fill level sensor having:
- two electrodes (5) with a plastic sheathing (6),
- a capacitive measurement device (10) for recording the electrical capacitance between the electrodes (5),
- an estimating device (20) for estimating a fill level (h) of a liquid (2) between the electrodes based on the recorded electrical capacitance, with different dielectric constants for sections of the plastic sheathing (6) situated in the liquid and outside the liquid being taken into consideration,
wherein, in the liquid, the plastic is soaked with the liquid, and
- a compensation device for compensating for a drift of the recorded electrical capacitance, which is due to a change in the dielectric constant of a section of the soaked plastic sheathing (6) when said soaked section dries after the fill level (h) has lowered,
wherein the compensation device (20) contains:
- a high-pass filter (11) for determining high-frequency changes in the electrical capacitance;
- an accumulator (12, 13) for accumulating the high-frequency changes in the electrical capacitance into an accumulation value;
- a damping member (14, 15) for periodically damping the accumulation value by a damping rate; and
- a summing element (16) which is coupled to the capacitance measurement device (10) and the accumulator (12, 13) for the purpose of compensating for the recorded electrical capacitance by way of the accumulation value.

2. Method for estimating a fill level, comprising the steps of:
- recording an electrical capacitance between two electrodes (5) which have a plastic sheathing (6),
- estimating a fill level (h) of a liquid (2) between the electrodes (5) based on the recorded electrical capacitance, with different dielectric constants for sections of the plastic sheathing (6) situated in the liquid and outside the liquid being taken into consideration, wherein
it is provided that, in the liquid, the plastic is soaked with liquid, and
- compensating for a drift of the recorded electrical capacitance, which is due to a change in the dielectric constant of a soaked section of the plastic sheathing (6) when said soaked section dries after the fill level (h) has lowered,
wherein the compensation comprises the following sub-steps:
- determining high-frequency changes in the electrical capacitance by means of a high-pass filter,
- accumulating the high-frequency changes in the electrical capacitance into an accumulation value,
- periodically damping the accumulation value by a damping rate, and
- compensating for the recorded electrical capacitance by way of the accumulation value.

3. Method according to Claim 2,
wherein high-frequency changes in the electrical capacitance are determined, said changes having a frequency which lies between the rate of change of the fill level height and the rate of change of the dielectric constant for the drying of the plastic of the plastic sheathing.

4. Method according to Claim 2 or 3,
wherein the damping rate is selected to be equal to the rate of change of the dielectric constant for the drying of the plastic of the plastic sheathing.

5. Method according to one of Claims 2 to 4,
**characterized in that**
the damping rate corresponds to the typical drying rate of the plastic.

## Revendications

1. Capteur de niveau capacitif comportant :
- deux électrodes (5) qui présentent un revêtement en matière plastique (6),
- un dispositif de mesure de capacité (10) destiné à détecter la capacité électrique entre les électrodes (5),
- un dispositif d'estimation (20) destiné à estimer un niveau (h) d'un liquide (2) entre les électrodes sur la base de la capacité électrique détectée en tenant compte de constantes diélectriques différentes pour des parties du revêtement en matière plastique (6) se trouvant dans le liquide et hors du liquide,
dans lequel la matière plastique présente dans le liquide s'imprègne du liquide, et
- un dispositif de compensation destiné à compenser une dérive de la capacité électrique provoquée par une modification des constantes diélectriques d'une partie du revêtement en matière plastique (6) imprégnée lorsque ladite partie imprégnée sèche après une diminution du niveau (h),
dans lequel le dispositif de compensation (20) comprend :
- un filtre passe-haut (11) destiné à déterminer des variations à haute fréquence de la capacité électrique ;
- un accumulateur (12, 13) destiné à accumuler les variations à haute fréquence de la capacité électrique jusqu'à une valeur d'accumulation ;
- un atténuateur (14, 15) destiné à atténuer périodiquement la valeur d'accumulation à une certaine vitesse d'atténuation, et
- un additionneur (16) qui est couplé au dispositif de mesure de capacité (10) et à l'accumulateur (12, 13) pour compenser la capacité électrique détectée avec la valeur d'accumulation.

2. Procédé d'estimation d'un niveau comportant les étapes consistant à :
- détecter une capacité électrique entre deux électrodes (5) qui présentent un revêtement en matière plastique (6),
- estimer un niveau (h) d'un liquide (2) entre les électrodes (5) sur la base de la capacité électrique détectée en tenant compte de constantes diélectriques différentes pour des parties du revêtement en matière plastique (6) se trouvant dans le liquide et hors du liquide,
dans lequel il est fait en sorte que la matière plastique présente dans le liquide s'imprègne du liquide, et
- compenser une dérive de la capacité électrique détectée provoquée par une modification des constantes diélectriques d'une partie du revêtement en matière plastique (6) imprégnée lorsque ladite partie imprégnée sèche après une diminution du niveau (h),
dans lequel la compensation comprend les étapes consistant à :
- déterminer des variations à haute fréquence de la capacité électrique au moyen d'un filtre passe-haut,
- accumuler les variations à haute fréquence de la capacité électrique pour une valeur d'accumulation,
- atténuer périodiquement la valeur d'accumulation avec une certaine vitesse d'atténuation, et
- compenser la capacité électrique détectée avec la valeur d'accumulation.

3. Procédé selon la revendication 2,
dans lequel on détermine des variations à haute fréquence de la capacité électrique qui présentent une fréquence se situant entre la vitesse de variation du niveau et la vitesse de variation des constantes diélectriques lors du séchage de la matière plastique du revêtement en matière plastique.

4. Procédé selon la revendication 2 ou 3,
dans lequel la vitesse d'atténuation sélectionnée est égale à la vitesse de variation des constantes diélectriques lors du séchage de la matière plastique du revêtement en matière plastique.

5. Procédé selon l'une des revendications 2 à 4, **caractérisé en ce que** la vitesse d'atténuation correspond à la vitesse de séchage typique de la matière plastique.
